# EUROPÄISCHE PATENTANMELDUNG

(11) **EP 1 191 797 A1**
(43) Veröffentlichungstag der Anmeldung: **27.03.2002**
(21) Anmeldenummer: 00810871.4
(22) Anmeldetag: 21.09.2000
(51) Int. Cl.: H04Q 7/14, H04Q 7/18

(54) **Personenfunkrufempfänger und Verfahren zum Filtern von Funkrufmeldungen**

(71) Anmelder: All Wireless AG, 3000 Bern 17 (CH)
(72) Erfinder: Badrutt, Guido, 3145 Niederscherli (CH)
(74) Vertreter: BOVARD AG - Patentanwälte

(57) **Zusammenfassung**

Es wird ein Personenfunkrufempfänger (1) und ein Verfahren zum Filtern von im Personenfunkrufempfänger (1) empfangenen Funkrufmeldungen (4) vorgeschlagen, welcher Personenfunkrufempfänger (1) ein Empfangsmodul (11) zum Empfang von Funkrufmeldungen (4) umfasst, die mit einem Funkidentifizierungscode adressiert sind, dessen Wert im Personenfunkrufempfänger (1) gespeichert ist. Der vorgeschlagene Personenfunkrufempfänger (1) umfasst einen Speicher (13), in welchem Meldungsfilterwerte (52) jeweils einem von möglichen mehreren im Personenfunkrufempfänger (1) gespeicherten Funkidentifizierungscodes (51) zugeordnet abgespeichert sind. Zudem umfasst der vorgeschlagene Personenfunkrufempfänger (1) ein Filtermodul (12), das eine im Meldungsteil (M) einer betreffenden empfangenen Funkrufmeldung (4) enthaltene Meldungsklasse (K) mit den Meldungsfilterwerten (52) vergleicht, die demjenigen im Personenfunkrufempfänger (1) gespeicherten Funkidentifizierungscode (51) zugeordnet sind, mit dem die betreffende empfangene Funkrufmeldung (4) adressiert ist, und das bei einer fehlenden Übereinstimmung den Meldungsteil (M) der betreffenden empfangenen Funkrufmeldung (4) nicht zur weiteren Behandlung im Personenfunkrufempfänger (1) abspeichert.

## Beschreibung

Die vorliegende Erfindung betrifft einen Personenfunkrufempfänger und ein Verfahren zum Filtern von Funkrufmeldungen. Insbesondere betrifft die vorliegende Erfindung einen Personenfunkrufempfänger und ein Verfahren zum Filtern von im Personenfunkrufempfänger empfangenen Funkrufmeldungen, welcher Personenfunkrufempfänger ein Empfangsmodul zum Empfang von Funkrufmeldungen umfasst, die mit einem Funkidentifizierungscode adressiert sind, dessen Wert im Personenfunkrufempfänger gespeichert ist.

Da Personenfunkrufempfänger ermöglichen, bestimmte Personen schnell und effizient zu kontaktieren, erfreuen sich die Personenfunkrufempfänger, die auch unter der Bezeichnung "Pager" bekannt sind, insbesondere für Anwendungen, in denen bestimmte Personengruppen gleichzeitig kontaktiert werden und/oder Informationen gleichzeitig (broadcastmässig) an Personengruppen geleitet werden, weiterhin grosser Beliebtheit.

In der Vergangenheit stellte sich das Problem, dass die Personenfunkrufempfänger vor Ort bei einem Betreiber eines Funkrufnetzes oder einer entsprechenden Geschäftsstelle des Betreibers präsentiert werden mussten, wenn sie mit neuen oder geänderten Adressen programmiert werden sollten. Die Adressen von Personenfunkrufempfängern entsprechen sogenannten Radio Identification Codes (RIC) oder Funkidentifizierungscodes. Dadurch bedingt, dass Personenfunkrufempfänger, die gleichzeitig als Gruppe adressiert werden sollen, mit einem gemeinsamen Gruppen-Funkidentifizierungscode, einem sogenannten Gruppen-RIC, programmiert werden müssen, war die physikalische Präsentation der Personenfunkrufempfänger bei Geschäftsstellen des betreffenden Betreibers in der Vergangenheit oft nötig. Aus Effizienzgründen wurde folglich eine bessere Lösung für die Gruppenorganisation von Personenfunkrufempfängern gewünscht.

In der Patentschrift US 6088457 werden ein Verfahren und ein System für die Programmierung von operationellen Parametern eines Personenfunkrufempfängers über die Luftschnittstelle beschrieben. Gemäss der Patentschrift US 6088457 wird der Personenfunkrufempfänger zunächst vom Betreiber des betreffenden Funkrufnetzes mittels einer über die Luftschnittstelle übertragenen Programmierungsmeldung in einen zeitbegrenzten Programmierungsmodus gesetzt. Während sich der Personenfunkrufempfänger im Programmierungsmodus befindet, können vom Betreiber operationelle Parameter des Personenfunkrufempfängers mittels weiterer Programmierungsmeldungen gesetzt werden, die über die Luftschnittstelle an eine vordefinierte Einzel- oder Gruppenadresse des Personenfunkrufempfängers übermittelt werden. Gemäss der Patentschrift US 6088457 können beispielsweise Adressen hinzugefügt oder gelöscht werden, spezifische Komponenten des Personenfunkrufempfängers ein- und ausgeschaltet werden, oder spezifische Dienste aktiviert und deaktiviert werden. Die in der Patentschrift US 6088457 vorgeschlagene Lösung ermöglicht zwar dem Betreiber eines Funkrufnetzes die Programmierung von operationellen Parametern von Personenfunkrufempfängern innerhalb des betreffenden Funkrufnetzes über die Luftschnittstelle; sie ermöglicht jedoch nicht, dass Benutzergruppen ihre Adressen, insbesondere ihre Gruppenadressen, ohne Zutun des Betreibers festlegen und ihre Personenfunkrufempfänger über die Luftschnittstelle entsprechend programmieren können. Dies ist insbesondere auch dadurch bedingt, dass die Kontrolle über die für den Empfang von Meldungen verwendeten Adressen, das heisst der entsprechenden Funkidentifizierungscodes (RIC) beim Betreiber des betreffenden Funkrufnetzes liegt.

Es ist eine Aufgabe dieser Erfindung, einen neuen Personenfunkrufempfänger und ein neues Verfahren für die Filterung von Funkrufmeldungen in Personenfunkrufempfängern vorzuschlagen, welche insbesondere die Gruppenorganisation von Personenfunkrufempfängern ohne die oben angeführten Nachteile ermöglichen.

Gemäss der vorliegenden Erfindung wird dieses Ziel insbesondere durch die Elemente der unabhängigen Ansprüche erreicht. Weitere vorteilhafte Ausführungsformen gehen ausserdem aus den abhängigen Ansprüchen und der Beschreibung hervor.

Dieses Ziel wird durch die vorliegende Erfindung insbesondere dadurch erreicht, dass ein Personenfunkrufempfänger mit einem Empfangsmodul zum Empfang von Funkrufmeldungen, die mit einem Funkidentifizierungscode adressiert sind, dessen Wert im Personenfunkrufempfänger gespeichert ist, einen Speicher umfasst, in welchem Meldungsfilterwerte jeweils einem von möglichen mehreren im Personenfunkrufempfänger gespeicherten Funkidentifizierungscodes zugeordnet abgespeichert sind, und dass der Personenfunkrufempfänger ein Filtermodul zur Filterung des Meldungsteils einer empfangenen Funkrufmeldung umfasst, welches Filtermodul so eingerichtet ist, dass es eine im Meldungsteil enthaltene Meldungsklasse mit den Meldungsfilterwerten vergleicht, die demjenigen im Personenfunkrufempfänger gespeicherten Funkidentifizierungscode zugeordnet sind, mit dem die betreffende empfangene Funkrufmeldung adressiert ist, und dass es bei einer fehlenden Übereinstimmung den Meldungsteil der betreffenden empfangenen Funkrufmeldung nicht abspeichert. Eine mit einem bestimmten Funkidentifizierungscode, beispielsweise ein Gruppen-Funkidentifizierungscode (Gruppen-RIC), adressierte Funkrufmeldung wird also zunächst wie im Stand der Technik durch Personenfunkrufempfänger empfangen, die mit diesem bestimmten Funkidentifizierungscode programmiert sind, das heisst in denen dieser bestimmte (Gruppen-) Funkidentifizierungscode gespeichert ist. Erfindungsgemäss wird danach jedoch der Meldungsteil der empfangenen Funkrufmeldung gefiltert, das heisst der Meldungsteil wird nur dann im Personenfunkrufempfänger zur Weiterbehandlung gespeichert, wenn eine im Meldungsteil enthaltene Meldungsklasse mit Meldungsfilterwerten übereinstimmt, die erfindungsgemäss im Personenfunkrufempfänger, dem bestimmte (Gruppen-) Funkidentifizierungscodes zugeordnet gespeichert sind. Der Vorteil des erfindungsgemässen Personenfunkrufempfängers, respektive des erfindungsgemässen Verfahrens zur Filterung von Funkrufmeldungen in Personenfunkrufempfängern besteht darin, dass die Festlegung und Speicherung (oder Programmierung) von Meldungsfilterwerten nicht der Kontrolle des Betreibers des betreffenden Funkrufnetzes zu unterliegen braucht, so dass eine Gruppenorganisation von Personenfunkrufempfängern basierend auf den Meldungsfilterwerten durch Benutzer und Benutzergruppen ermöglicht wird.

In einer Ausführungsvariante umfasst der Personenfunkrufempfänger ein Gültigkeitskontrollmodul zum automatischen Löschen oder Deaktivieren von abgelaufenen Meldungsfilterwerten, welches Gültigkeitskontrollmodul die Löschung oder Deaktivierung basierend auf Zeitangaben vornimmt, die jeweils einem Meldungsfilterwert zugeordnet gespeichert sind. Die Zeitangaben umfassen beispielsweise eine Zeitdauer oder einen Ablaufszeitpunkt (Verfalldatum). Der Vorteil dieses Gültigkeitskontrollmoduls besteht darin, dass es ermöglicht, Meldungsfilterwerte benutzerspezifisch mit einer befristeten Gültigkeit zu versehen, so dass eine zeitlich flexible Gruppenorganisation von Personenfunkrufempfängern basierend auf den Meldungsfilterwerten ermöglicht wird.

Vorzugsweise umfasst der Personenfunkrufempfänger ein Filteraktualisierungsmodul zum Löschen, Ändern, Aktivieren, Deaktivieren und/oder Hinzufügen von Meldungsfilterwerten, welches Filteraktualisierungsmodul so eingerichtet ist, dass es entsprechende Lösch-, Änderungs-, Aktivierungs-, Deaktivierungs- und/oder Hinzufügebefehle in Funkrufmeldungen entgegennimmt und ausführt. Der Vorteil dieses Filteraktualisierungsmoduls besteht darin, dass es ermöglicht, die Meldungsfilterwerte über die Luftschnittstelle im Personenfunkrufempfänger zu speichern (programmieren), so dass eine dynamische Gruppenorganisation von Personenfunkrufempfängern basierend auf den Meldungsfilterwerten ermöglicht wird.

Vorzugsweise umfasst der Personenfunkrufempfänger ein Sicherheitsmodul zur Überprüfung der Zulässigkeit empfangener Lösch-, Änderungs-, Aktivierungs-, Deaktivierungs- und/oder Hinzufügebefehle, respektive der Authentizität des Ursprungs der empfangenen Lösch-, Änderungs-, Aktivierungs-, Deaktivierungs- und/oder Hinzufügebefehle, welches Sicherheitsmodul so eingerichtet ist, dass es empfangene Lösch-, Änderungs-, Aktivierungs-, Deaktivierungs- und/oder Hinzufügebefehle nicht zur Ausführung an das Filteraktualisierungsmodul weiterleitet, falls die Überprüfung der Zulässigkeit, respektive der Authentizität, negativ ausfällt. Der Vorteil dieses Sicherheitsmoduls besteht darin, dass es ermöglicht sicherzustellen, dass die Meldungsfilterwerte nur durch berechtigte Benutzer über die Luftschnittstelle im Personenfunkrufempfänger gespeichert (programmiert) werden können, beispielsweise durch den zuständigen Administrator einer Firma, einer Organisation oder eines Vereins mit mehreren Benutzergruppen, die jeweils durch einen bestimmten zugeordneten Meldungsfilterwert definiert sind und durch entsprechende Meldungsklassen adressiert werden können.

In einer Ausführungsvariante umfasst der Personenfunkrufempfänger ein Anzeigemodul zur automatischen Darstellung von aktualisierten Meldungsfilterwerten auf einer Anzeige des Personenfunkrufempfängers. Der Vorteil dieses Anzeigemoduls besteht darin, dass es ermöglicht, die Benutzer automatisch und prompt über Änderungen in der auf Meldungsfiltertwerten basierten Gruppenorganisation der Personenfunkrufempfänger zu informieren.

Nachfolgend wird eine Ausführung der vorliegenden Erfindung anhand eines Beispieles beschrieben. Das Beispiel der Ausführung wird durch folgende beigelegten Figuren illustriert:
Figur 1 zeigt ein Schichtendiagramm, welches schematisch die funktionalen Schichten eines Personenfunkrufempfängers illustriert, der mit einem Erweiterungsmodul versehen ist.
Figur 2 zeigt ein Blockdiagramm, welches schematisch einen erweiterten Personenfunkrufempfänger illustriert, der über ein Funkrufnetz Funkrufmeldungen von einem Personenfunkrufsender empfängt.
Figur 3 zeigt schematisch den möglichen Aufbau einer Funkrufmeldung.
Figur 4 zeigt schematisch den möglichen Aufbau eines Datensatzes des Speichers für Meldungsfilterwerte.

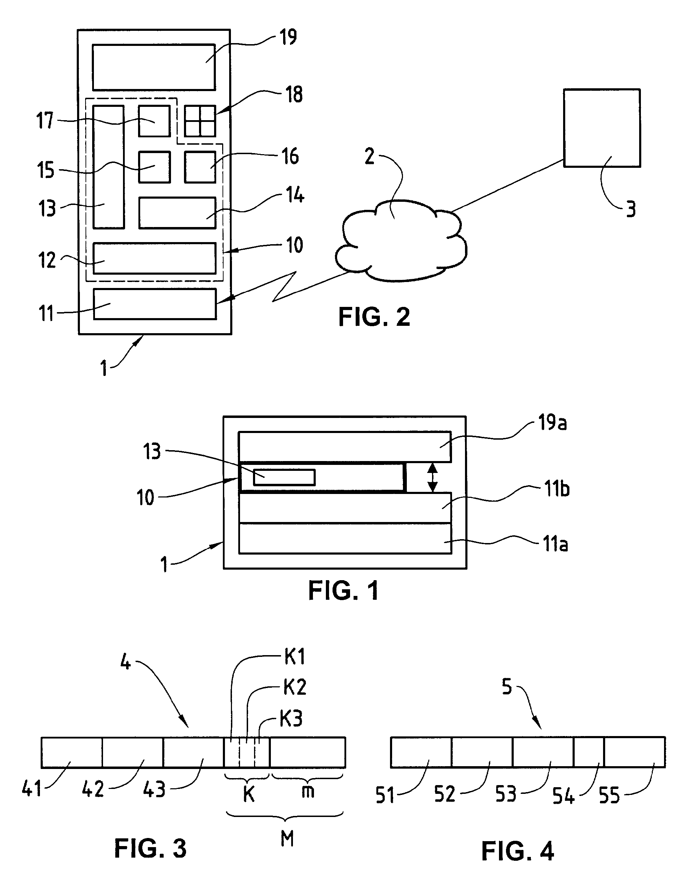

In der Figur 1 bezieht sich die Bezugsziffer 1 auf einen Personenfunkrufempfänger, der mit einem Erweiterungsmodul 10 erweitert ist. Der Personenfunkrufempfänger 1 basiert beispielsweise auf einem herkömmlichen Personenfunkrufempfänger, beispielsweise ein ERMES- oder POCSAG-Personenfunkrufempfänger, der, wie im Schichtendiagramm der Figur 1 dargestellt ist, die herkömmlichen Schichten mit der Radiofunktionalität 11a und der Meldungsbearbeitungsfunktionalität 11b sowie eine herkömmliche Präsentationsschicht 19a für die visuelle, akustische und/oder auf Vibrationen basierende Darstellung und/oder Ankündigung von Ereignissen (empfangene Funkrufmeldungen) umfasst. Das Erweiterungsmodul 10 umfasst seinerseits mehrere funktionale Module 12 bis 17, die später beschrieben werden, und wird vorzugsweise mittels programmierter Softwaremodule ausgeführt, die in einem Speicher des Personenfunkrufempfängers 1 gespeichert und auf einem Prozessor des Personenfunkrufempfängers 1 ausgeführt werden. Wie in der Figur 1 dargestellt ist, ist dem Erweiterungsmodul 10 auch ein Speicher 13 zur Speicherung von Meldungsfilterwerten, auf die später näher eingegangen wird, zugewiesen. Der Fachmann wird verstehen, dass das Erweiterungsmodul 10 auch teilweise oder vollständig hardwaremässig ausgeführt werden kann.

In der Figur 2 ist der Personenfunkrufempfänger 1 mittels eines Blockdiagramms dargestellt, wobei das Erweiterungsmodul 10 detailliert mit seinen verschiedenen Modulen 12 bis 17 illustriert wird. Das in der Figur 2 dargestellte Empfangsmodul 11 umfasst die Funktionen der oben erwähnten herkömmlichen Schichten mit der Radiofunktionalität 11a und der Meldungsbearbeitungsfunktionalität 11b. In herkömmlicher Weise werden vom Empfangsmodul 11 Funkrufmeldungen empfangen, die vom schematisch dargestellten Funkrufnetz 2 ausgesendet werden.

Der Aufbau einer Funkrufmeldung 4 ist in der Figur 3 dargestellt. Die Funkrufmeldung 4 ist beispielsweise eine ERMES-Funkrufmeldung (European Radio Message System) gemäss dem vom European Telecommunications Standards Institute (ETSI) definierten Standard ETS 300 133, insbesondere gemäss ETS 300 133-4 betreffend die ERMES Luftschnittstelle. Die Funkrufmeldung 4 umfasst beispielsweise einen Synchronisationsteil 41, einen Systeminformationsteil 42, einen Adressierungsteil 43 und einen Meldungsteil M.

Falls der im Adressierungsteil 43 einer empfangenen Funkrufmeldung 4 enthaltene Funkidentifizierungscode, mit dem die Funkrufmeldung 4 adressiert ist, mit einem Funkidentifizierungscode übereinstimmt, der im Personenfunkrufempfänger 1 gespeichert ist, beispielsweise ein Einzel-Funkidentifizierungscode (Einzel-RIC) oder ein Gruppen-Funkidentifizierungscode (Gruppen-RIC), wird die betreffende Funkrufmeldung 4 in herkömmlicher Weise durch das Empfangsmodul 11 (siehe Figur 1) entgegengenommen.

Wie in der Figur 3 illustriert wird, umfasst der Meldungsteil M der Funkrufmeldung 4 gemäss der Lehre der vorliegenden Erfindung eine Meldungsklasse K, die beispielsweise aus mehreren Einzelzeichen besteht, beispielsweise aus den Einzelzeichen K1, K2 und K3, wobei jedes Einzelzeichen durch ein numerisches, ein alphanumerisches oder ein Sonderzeichen repräsentiert wird. Sonderzeichen können beispielsweise als sogenannte "Wildcards" oder Stellvertreterzeichen verwendet werden, die stellvertretend für irgendein beliebiges Zeichen verwendet werden können. Die Meldungsklasse K ist vorzugsweise als Datenvorsatz des Meldungsteils M ausgeführt, hinter welchem Datenvorsatz dann die Nutzinformationen m des Meldungsteils M folgen. Der Fachmann wird verstehen, dass auch Längenangaben und/oder Trennzeichen vor und/oder nach der Meldungsklasse K im Meldungsteil M vorhanden sein können.

In der Figur 4 wird ein Beispiel eines Datensatzes 5 des bereits oben erwähnten Speichers 13 für Meldungsfilterwerte illustriert. Der Datensatz 5 umfasst einen Funkidentifizierungscode 51 (ein Einzel- oder Gruppen-RIC), einen diesem Funkidentifizierungscode 51 zugeordneten Meldungsfilterwert 52, dessen Format demjenigen der oben beschriebenen Meldungsklasse K entspricht, eine Zeitangabe 53, beispielsweise ein Datum oder eine Zeitdauer, die angibt, wann die Gültigkeit des betreffenden Meldungsfilterwerts 52 abläuft (verfällt), eine Statusangabe 54, die beispielsweise angibt, ob der betreffende Meldungsfilterwert 52 aktiviert oder deaktiviert ist, und weitere Zusatzinformationen 55, beispielsweise ein Datum, das angibt, wann der betreffende Meldungsfilterwert 52 im Personenfunkrufempfänger 1 gespeichert wurde, und/oder eine Zeitangabe, beispielsweise ein Datum und/oder eine genaue Uhrzeit, die spezifiziert, wann der betreffende Meldungsfilterwert 52 im Personenfunkrufempfänger 1 durch ein nicht dargestelltes Aktivierungsmodul des Erweiterungsmoduls 10 automatisch aktiviert werden soll.

Im Filtermodul 12, das in der Figur 2 dargestellt ist, wird der Meldungsteil M einer vom Empfangsmodul 11 empfangenen Funkrufmeldung 4 gefiltert. Dabei wird im Filtermodul 12 die im Meldungsteil M der empfangenen Funkrufmeldung 4 enthaltene Meldungsklassifizierung K mit denjenigen im Speicher 13 gespeicherten Meldungsfilterwerten 52 verglichen, die demjenigen Funkidentifzierungscode 51 zugeordnet sind, der im Adressierungsteil 43 der empfangenen Funkrufmeldung 4 enthalten ist, das heisst mit dem die empfangene Funkrufmeldung 4 adressiert ist. Falls im Filtermodul 12 bestimmt wird, dass die Meldungsklasse K der empfangenen Funkrufmeldung 4 mit keinem der betreffenden gespeicherten Meldungsfilterwerten 52 übereinstimmt, wird der Meldungsteil M der empfangenen Funkrufmeldung 4 nicht zur weiteren Behandlung entgegengenommen, das heisst, der Meldungsteil M wird nicht abgespeichert und der Benutzer des Personenfunkrufempfängers 1 wird nicht über den Empfang der betreffenden Funkrufmeldung 4 informiert. Aus der Sicht des Benutzers werden Funkrufmeldungen 4 mit einer Meldungsklasse K, die nicht mit abgespeicherten Meldungsfilterwerten 52 übereinstimmt, im Personenfunkrufempfänger 1 nicht empfangen. Das Filtermodul 12 ermöglicht also eine Filterung von Funkrufmeldungen 4 im Personenfunkrufempfänger 1 auf der Basis von Meldungsklassen K und abgespeicherten Meldungsfilterwerten 52. Durch Programmierung, respektive Speicherung von entsprechenden Meldungsfilterwerten 52 im Speicher 13 des Personenfunkrufempfängers 1 kann folglich eine Gruppenorganisation von Personenfunkrufempfängern 1 vorgenommen werden, wobei jeweils verschiedene Gruppen für einen gemeinsamen Funkidentifizierungscode 51 definiert werden können, die dann mittels entsprechender Meldungsklassen K adressiert werden können.

In der nachfolgenden Tabelle 1 wird am Beispiel eines Personenfunkrufempfängers 1, der mit einem Funkidentifizierungscode "X" programmiert ist, welchem Funkidentifizierungscode "X" in einem ersten Datensatz 5 des Speichers 13 der Meldungsfilterwert 52 mit dem Inhalt "129" und in einem zweiten Datensatz 5 des Speichers 13 der Meldungsfilterwert 52 mit dem Inhalt "313" zugeordnet ist, gezeigt, wie Funkrufmeldungen 4, die mit dem Funkidentifizierungscode "X" adressiert sind und die jeweils einen Meldungsteil M mit einer Meldungsklasse K, mit den Zeichen K1, K2 und K3, umfassen, im Personenfunkrufempfänger 1 behandelt werden, wobei im dargestellten Beispiel das Zeichen "-" als Stellvertreter- oder "Wildcard"-Zeichen verwendet wird.

**Tabelle 1**

| Meldungsfilterwerte des Personenfunkrufempfängers für Funkidentifizierungscode "X" | Meldungsklasse K=(K1 K2 K3) der Funkrufmeldung | Aktion im Personenfunkrufempfänger |
|---|---|---|
| 129 und 313 | 129 | Meldung wird entgegengenommen |
| | 325 | Meldung wird nicht entgegengenommen |
| | 128 | Meldung wird nicht entgegengenommen |
| | 12 - | Meldung wird entgegengenommen |
| | 3 - - | Meldung wird entgegengenommen |
| | 5 - - | Meldung wird nicht entgegengenommen |
| | - - 3 | Meldung wird entgegengenommen |
| | - 2 - | Meldung wird entgegengenommen |
| | - 29 | Meldung wird entgegengenommen |
| | 3 - 3 | Meldung wird entgegengenommen |
| | - - - | Meldung wird entgegengenommen |

In einer bevorzugten Ausführungsvariante umfasst das Erweiterungsmodul 10 des Personenfunkrufempfängers 1 ein Filteraktualisierungsmodul 14 zum dynamischen Löschen, Ändern, Aktivieren, Deaktivieren und/oder Hinzufügen von Datensätzen 5 im Speicher 13 des Personenfunkrufempfängers 1 und/oder von einzelnen oder mehreren in diesen Datensätzen 5 enthaltenen Datenelementen 51 bis 55, insbesondere von Meldungsfilterwerten 52. Das Filteraktualisierungsmodul 14 nimmt entsprechende Lösch-, Änderungs-, Aktivierungs-, Deaktivierungs- und/oder Hinzufügebefehle, die jeweils in Funkrufmeldungen 4, insbesondere im Meldungsteil M einer Funkrufmeldung 4, enthalten sind, über die Luftschnittstelle von einem Funkrufsender 3 entgegen und führt die dem betreffenden Befehl entsprechende Operation im Personenfunkrufempfänger 1 aus. Funkrufmeldungen 4 mit solchen Befehlen können an Einzel- oder Gruppen-Funkidentifizierungscodes des/der betreffenden Personenfunkrufempfänger(s) 1 adressiert werden (Einzel- oder Gruppenprogrammierung), wobei auch ein bestimmter separater Einzel- oder Gruppen-Funkidentifizierungscode speziell für diesen Zweck, nämlich die Programmierung der Personenfunkrufempfänger 1 mit den über die Luftschnittstelle übertragenen Befehlen, vorgesehen und reserviert werden kann. Es wäre auch möglich, dem Filteraktualisierungsmodul 14 Befehle direkt mittels der Bedienungselemente 18 des Personenfunkrufempfängers 1 einzugeben (beispielsweise durch Passwort gesichert) oder dazu eine nicht dargestellte Geräteschnittstelle des Personenfunkrufempfängers 1 zu verwenden, mit welcher Geräteschnittstelle Personenfunkrufempfänger 1 üblicherweise ausgestattet sind, um die Funkidentifizierungscodes der Personenfunkrufempfänger 1 auf herkömmliche Weise mittels Datenterminals zu programmieren.

In einer Ausführungsvariante umfasst das Erweiterungsmodul 10 des Personenfunkrufempfängers 1 ein Sicherheitsmodul 16 zur Überprüfung der Zulässigkeit empfangener Lösch-, Änderungs-, Aktivierungs-, Deaktivierungs- und/oder Hinzufügebefehle, respektive der Authentizität des Ursprungs der empfangenen Lösch-, Änderungs-, Aktivierungs-, Deaktivierungs- und/oder Hinzufügebefehle. Das Sicherheitsmodul 16 überprüft beispielsweise ein vom Absender 3 des betreffenden Befehls mitgesendetes Passwort, das den Absender 3 als berechtigt ausweist. Es ist auch möglich, dass das Sicherheitsmodul 16 ein vom Absender 3 mitgesendetes digitales Zertifikat oder eine digitale Signatur überprüft, um die Authentizität des Absenders 3, respektive des Ursprungs des betreffenden Befehls zu verifizieren. Falls die Überprüfung der Zulässigkeit empfangener Lösch-, Änderungs-, Aktivierungs-, Deaktivierungs- und/oder Hinzufügebefehle, respektive die Überprüfung der Authentizität des Absenders, respektive des Ursprungs der empfangenen Befehle, negativ ausfällt, werden die betreffenden Befehle vom Sicherheitsmodul 16 nicht zur Ausführung an das Filteraktualisierungsmodul 14 weitergeleitet. Das Sicherheitsmodul 16 kann den Zugriff auf Datensätze 5 im Speicher 13 des Personenfunkrufempfängers 1 und/oder auf einzelne oder mehrere in diesen Datensätzen 5 enthaltene Datenelemente 51 bis 55, insbesondere auf Meldungsfilterwerte 52, beispielsweise für verschiedene Funkidentifizierungscodes 51 separat schützen.

In einer Ausführungsvariante umfasst das Erweiterungsmodul 10 des Personenfunkrufempfängers 1 ein Anzeigemodul 17, das aktualisierte Datensätze 5 des Speichers 13 und/oder einzelne oder mehrere in diesen Datensätzen 5 enthaltene Datenelemente 51 bis 55, insbesondere Meldungsfilterwerte 52, automatisch und/oder auf Befehl des Benutzers, welche Befehle beispielsweise mittels der Bedienungselemente 18 des Personenfunkrufempfängers 1 eingegeben werden können, auf einer Anzeige 19 des Personenfunkrufempfängers 1 darstellt. Die automatische Darstellung aktualisierter Datensätze 5 oder darin enthaltener Datenelemente 51 bis 55, insbesondere aktualisierte Meldungsfilterwerte 52, durch das Anzeigemodul 17 kann beispielsweise durch das Filteraktualisierungsmodul 14 eingeleitet werden.

In einer Ausführungsvariante umfasst das Erweiterungsmodul 10 des Personenfunkrufempfängers 1 ein Gültigkeitskontrollmodul 15, das die den Meldungsfilterwerten 52 zugeordneten Zeitangaben 53 überprüft, beispielsweise periodisch oder auf Befehl durch eine Zentralstelle des Funkrufnetzes 2, und das abgelaufene (verfallene) Meldungsfilterwerte 52 automatisch im Speicher 13 löscht oder deaktiviert, wobei beispielsweise bei einer Deaktivierung die Statusangabe 54 auf deaktiviert gesetzt wird. Die für die Überprüfung notwendige Referenzzeitangabe, beispielsweise das aktuelle Datum, kann zum Beispiel aus dem Systeminformationsteil 42 der Funkrufmeldungen 4 entnommen werden (z.B. bei ERMES-Personenfunkrufempfängern) oder kann den Personenfunkrufempfängern 1 in speziellen Funkrufmeldungen 4, beispielsweise nachts, von einer Zentralstelle des Funkrufnetzes 2 übermittelt werden. Der Personenfunkrufempfänger 1 kann zu diesem Zweck auch mit einer eigenen Zeiterfassungsvorrichtung ausgeführt werden.

Der vorgeschlagene Personenfunkrufempfänger 1 ermöglicht eine flexible dynamische Gruppenorganisation, die ohne Zutun des Betreibers des Funkrufnetzes 2 durch interessierte Firmen, Vereine oder Organisationen jeweils für die ihnen vom Betreiber zugewiesenen Funkidentifizierungscodes definiert und verwaltet werden kann. Zum Beispiel kann ein hierarchisch aufgebauter Alarmierungsplan direkt auf die (auf Meldungsfilterwerten basierte) Gruppenorganisation der Personenfunkrufempfänger 1 abgebildet werden. Für die Alarmierung von hierarchisch organisierten Truppen kann beispielsweise dem ersten Zeichen K1 die Bedeutung einer Kompanie, dem nachfolgenden Zeichen K2 die Bedeutung einer Einheit innerhalb der Kompanien, und dem abschliessenden Zeichen K3 die Bedeutung einer Truppe innerhalb dieser Einheiten zugewiesen werden. Den einzelnen Zeichen einer Meldungsklasse K können beispielsweise auch hierarchisch aufgeteilte geografische Gebiete zugewiesen werden, so dass beispielsweise in Notfällen Einheiten in Abhängigkeit des betroffenen geografischen Gebiets und/oder in Abhängigkeit der Ernsthaftigkeit des betreffenden Notfalls mittels einer einzigen, entsprechend klassifizierten Meldung alarmiert werden können. Es können auch Informationsdienste definiert werden, wobei den einzelnen Zeichen K1 bis K3 beispielsweise die Bedeutung einer hierarchisch organisierten Sach- oder Inhaltsspezifikation des Informationsdienstes zugewiesen wird. Insbesondere für Informationsdienste, für die ein Benutzer ein Abonnement lösen muss, können die Funktionen des Gültigkeitsmoduls zur automatischen Deaktivierung eines Meldungsfilterwerts beim Ablauf des Abonnements eingesetzt werden.

Die vorliegende Erfindung ermöglicht die Effizienz und Schnelligkeit von Gruppenrufen auszunützen, ohne aber die aufwendige und kostspielige Verwaltung und Umprogrammierung von Gruppennummern, die bei herkömmlichen Systemen nötig sind, durchführen zu müssen. Durch die dynamische Programmierung von Meldungsfilterwerten 52 können Gruppenzugehörigkeiten kurzfristig und schnell definiert und implementiert werden, beispielsweise sogar während eines Ernstfalls. Es kann eine Vielzahl von Gruppen definiert und implementiert werden, ohne dass dazu zusätzliche Gruppen-Funkidentifizierungscodes (RIC) verwendet werden müssen. Ein einzelner Personenfunkrufempfänger 1 kann mehreren Gruppen zugeteilt werden, ohne dass zusätzliche Gruppen-Funkidentifizierungscodes verwendet werden müssen, wobei ein Benutzer jederzeit seine Meldungsfilterwerte 52, das heisst seine Gruppenzugehörigkeiten, auf der Anzeige 19 kontrollieren kann. Insbesondere durch die Verwendung von Stellvertreter- oder "Wildcard"-Zeichen, die sowohl in der Meldungsklasse K von Funkrufmeldungen 4 als auch im Meldungsfilterwert 52 von Datensätzen 5 des Speichers 13 verwendet werden können, kann nicht nur eine Gruppe, sondern können mehrere verschiedene Gruppen mit einer Funkrufmeldung 4 gleichzeitig informiert, respektive alarmiert, werden.

### Liste der Bezugszeichen

- 1: Personenfunkrufempfänger
- 2: Funkrufnetz
- 3: Funkrufsender
- 4: Funkrufmeldung
- 5: Datensatz des Speichers mit Meldungsfilterwerten
- 10: Erweiterungsmodul
- 11: Empfangsmodul
- 11 a: Schicht mit Radiofunktionalität
- 11 b: Schicht mit Meldungsbearbeitungsfunktionalität
- 12: Filtermodul
- 13: Speicher mit Meldungsfilterwerten
- 14: Filteraktualisierungsmodul
- 15: Gültigkeitskontrollmodul
- 16: Sicherheitsmodul
- 17: Anzeigemodul
- 18: Bedienungselemente
- 19: Anzeige
- 19a: Präsentationsschicht (für Anzeige, Akustik und Vibration)
- 41: Synchronisationsteil
- 42: Systeminformationsteil
- 43: Adressierungsteil
- 51: Funkidentifizierungscode (Gruppen- oder Einzel-RIC)
- 52: Meldungsfilterwert
- 53: Zeitangabe (Datum)
- 54: Statusangabe
- 55: Zusatzinformationen
- K: Meldungsklasse
- K1, K2, K3: Einzelziffern der Meldungsklasse
- M: Meldungsteil
- m: Nutzinformation des Meldungsteils

## Patentansprüche

1. Personenfunkrufempfänger (1) umfassend ein Empfangsmodul (11) zum Empfang von Funkrufmeldungen (4), die mit einem Funkidentifizierungscode adressiert sind, dessen Wert im Personenfunkrufempfänger (1) gespeichert ist, **dadurch gekennzeichnet,**
**dass** er einen Speicher (13) umfasst, in welchem Meldungsfilterwerte (52) jeweils einem von möglichen mehreren im Personenfunkrufempfänger (1) gespeicherten Funkidentifizierungscodes (51) zugeordnet abgespeichert sind, und
**dass** er ein Filtermodul (12) zur Filterung des Meldungsteils (M) einer empfangenen Funkrufmeldung (4) umfasst, welches Filtermodul (12) so eingerichtet ist, dass es eine im Meldungsteil (M) enthaltene Meldungsklasse (K) mit den Meldungsfilterwerten (52) vergleicht, die demjenigen im Personenfunkrufempfänger (1) gespeicherten Funkidentifizierungscode (51) zugeordnet sind, mit dem die betreffende empfangene Funkrufmeldung (4) adressiert ist, und dass es bei einer fehlenden Übereinstimmung den Meldungsteil (M) der betreffenden empfangenen Funkrufmeldung (4) nicht abspeichert.

2. Personenfunkrufempfänger (1) gemäss Anspruch 1, **dadurch gekennzeichnet, dass** er ein Gültigkeitskontrollmodul (15) zum automatischen Löschen oder Deaktivieren von abgelaufenen Meldungsfilterwerten (52) umfasst, welches Gültigkeitskontrollmodul (15) die Löschung oder Deaktivierung basierend auf Zeitangaben (53) vornimmt, die jeweils einem Meldungsfilterwert (52) zugeordnet gespeichert sind.

3. Personenfunkrufempfänger (1) gemäss einem der Ansprüche 1 oder 2, **dadurch gekennzeichnet, dass** er ein Filteraktualisierungsmodul (14) zum Löschen, Ändern, Aktivieren, Deaktivieren und/oder Hinzufügen von Meldungsfilterwerten (52) umfasst, welches Filteraktualisierungsmodul (14) so eingerichtet ist, dass es entsprechende Lösch-, Änderungs-, Aktivierungs-, Deaktivierungs- und/oder Hinzufügebefehle in Funkrufmeldungen (4) entgegennimmt und ausführt.

4. Personenfunkrufempfänger (1) gemäss Anspruch 3, **dadurch gekennzeichnet, dass** er ein Sicherheitsmodul (16) zur Überprüfung der Zulässigkeit empfangener Lösch-, Änderungs-, Aktivierungs-, Deaktivierungs- und/oder Hinzufügebefehle, respektive der Authentizität des Ursprungs der empfangenen Lösch-, Änderungs-, Aktivierungs-, Deaktivierungs- und/oder Hinzufügebefehle, umfasst, welches Sicherheitsmodul (16) so eingerichtet ist, dass es empfangene Lösch-, Änderungs-, Aktivierungs-, Deaktivierungs- und/oder Hinzufügebefehle nicht zur Ausführung an das Filteraktualisierungsmodul (14) weiterleitet, falls die Überprüfung der Zulässigkeit, respektive der Authentizität, negativ ausfällt.

5. Personenfunkrufempfänger (1) gemäss Anspruch 3, **dadurch gekennzeichnet, dass** er ein Anzeigemodul (17) zur automatischen Darstellung von aktualisierten Meldungsfilterwerten (52) auf einer Anzeige (19) des Personenfunkrufempfängers (1) umfasst.

6. Verfahren zum Filtern von Funkrufmeldungen (4), die in einem Personenfunkrufempfänger (1) empfangen werden, der ein Empfangsmodul (11) zum Empfang von Funkrufmeldungen (4) umfasst, die mit einem Funkidentifizierungscode adressiert sind, dessen Wert im Personenfunkrufempfänger (1) gespeichert ist, **dadurch gekennzeichnet,**
**dass** im Personenfunkrufempfänger (1) eine im Meldungsteil (M) einer betreffenden empfangenen Funkrufmeldung (4) enthaltene Meldungsklasse (K) mit Meldungsfilterwerten (52) verglichen wird, die demjenigen im Personenfunkrufempfänger (1) gespeicherten Funkidentifizierungscode (51) zugeordnet sind, mit dem die betreffende empfangene Funkrufmeldung (4) adressiert ist, und
**dass** bei einer fehlenden Übereinstimmung der Meldungsteil (M) der betreffenden empfangenen Funkrufmeldung (4) nicht im Personenfunkrufempfänger (1) abgespeichert wird.

7. Verfahren gemäss Anspruch 6, **dadurch gekennzeichnet, dass** im Personenfunkrufempfänger (1) basierend auf Zeitangaben (53), die jeweils einem Meldungsfilterwert (52) zugeordnet gespeichert sind, abgelaufene Meldungsfilterwerte (52) automatisch gelöscht oder deaktiviert werden.

8. Verfahren gemäss einem der Ansprüche 6 oder 7, **dadurch gekennzeichnet, dass** im Personenfunkrufempfänger (1) Lösch-, Änderungs-, Aktivierungs-, Deaktivierungs- und/oder Hinzufügebefehle in Funkrufmeldungen (4) entgegengenommen und ausgeführt werden, so dass entsprechend diesen Befehlen im Personenfunkrufempfänger (1) Meldungsfilterwerte (52) gelöscht, geändert, aktiviert, deaktiviert und/oder hinzugefügt werden.

9. Verfahren gemäss Anspruch 8, **dadurch gekennzeichnet, dass** im Personenfunkrufempfänger (1) die Zulässigkeit empfangener Lösch-, Änderungs-, Aktivierungs-, Deaktivierungs- und/oder Hinzufügebefehle, respektive die Authentizität des Ursprungs der empfangenen Lösch-, Änderungs-, Aktivierungs-, Deaktivierungs- und/oder Hinzufügebefehle, überprüft wird, und dass empfangene Lösch-, Änderungs-, Aktivierungs-, Deaktivierungs- und/oder Hinzufügebefehle nicht ausgeführt werden, falls die Überprüfung der Zulässigkeit, respektive der Authentizität, negativ ausfällt.

10. Verfahren gemäss Anspruch 8, **dadurch gekennzeichnet, dass** aktualisierte Meldungsfilterwerte (52) automatisch auf einer Anzeige (19) des Personenfunkrufempfängers (1) dargestellt werden.
